# EUROPÄISCHE PATENTANMELDUNG

(11) **EP 1 862 885 A2**
(43) Veröffentlichungstag der Anmeldung: **05.12.2007**
(21) Anmeldenummer: 07010085.4
(22) Anmeldetag: 21.05.2007
(51) Int. Cl.: G06F 1/26

(54) **Schaltungsanordnung zur verlustarmen Zuschaltung eines Monitors beim Einschalten eines Computers sowie entsprechendes Verfahren**

(30) Priorität: 30.05.2006 DE 102006025163
(71) Anmelder: Fujitsu Siemens Computers GmbH, 80807 München (DE)
(72) Erfinder: Busch, Peter, 86179 Augsburg (DE)
(74) Vertreter: Epping - Hermann - Fischer

(57) **Zusammenfassung**

Die Erfindung betrifft einen Computer mit einem Netzspannungseingang (8), einem Netzteil (3), das mit dem Netzspannungseingang (8) verbindbar ist, und einem Monitoranschluss (9) zum Anschließen eines Monitors (11), wobei der Monitoranschluss (9) über ein Relais (5) mit einer Versorgungsspannung verbindbar ist. Der Computer ist erfindungsgemäß durch eine Steuereinheit (13) gekennzeichnet, die dazu eingerichtet ist, nach einem Einschalten des Computers (3) einen Steueranschluss des Relais (5) zunächst während einer ersten Zeitdauer mit einer ersten Versorgungsspannung (12 Volt) und während einer zweiten Zeitdauer mit einer zweiten Versorgungsspannung (5 Volt) zu versorgen, wobei die zweite Versorgungsspannung (5 Volt) kleiner als die erste Versorgungsspannung (12 Volt) ist.

## Beschreibung

Schaltungsanordnung zur verlustarmen Zuschaltung eines Monitors beim Einschalten eines Computers sowie entsprechendes Verfahren

Die Erfindung betrifft eine Schaltungsanordnung für einen Computer mit einem Netzspannungseingang, einem Netzteil, das mit dem Netzspannungseingang verbindbar ist, und einem Monitoranschluss zum Anschließen eines Monitors, wobei der Monitoranschluss über ein Relais mit einer Versorgungsspannung verbindbar ist. Außerdem betrifft die Erfindung ein Verfahren zum Betreiben eines Computers, an den über ein Relais ein Monitor zu seiner Versorgung mit einer Versorgungsspannung angeschlossen ist.

Eine derartige Schaltungsanordnung ist beispielsweise in PC-Stromversorgungen enthalten. Ein Monitor ist dabei an den PC angeschlossen und bei Einschalten des Computers wird automatisch der Monitor mit eingeschaltet. Nach Abschalten des Computers wird ebenfalls der Monitor vom Netz getrennt, so dass Standby-Ströme im Monitor vermieden werden.

PCs und damit PC-Stromversorgungen sollen immer energiesparender werden. Behörden oder Organisationen, die z. B. Umweltzeichen wie den "blauen Engel" vergeben, schreiben Zielwerte in Form von Wirkungsgraden vor. In Netzteilen, insbesondere Schaltnetzteilen, die in PC-Stromversorgungen verwendet werden, muss dazu sowohl auf der Primär- wie auch auf der Sekundärseite nach Ursachen für Verlustleistung gesucht werden und nach Methoden, sie zu reduzieren.

In Netzteilen der gehobenen Klasse werden bisher Relais eingesetzt, die erregerseitig von einer sekundärseitigen Spannung angesteuert und dadurch aktiviert werden. Durch das Relais wird eine Netzausgangsbuchse mit Spannung versorgt, so dass ein daran angeschlossener Monitor Netzspannung erhält. Das hat den Vorteil, dass der Monitor während der Stillstandszeit des PCs vom Netz getrennt ist und daher keine Standby-Verlustleistung verbraucht. Dadurch wird während der Zeit, in der der PC abgeschaltet ist, Energie eingespart.

Da die Wirkungsgradvorschriften weitere Energieeinsparungen notwendig machen, ist es Aufgabe der Erfindung, den Wirkungsgrad weiter zu verbessern.

Diese Aufgabe wird durch eine Schaltungsanordnung der eingangs genannten Art gelöst, die durch eine Steuereinheit gekennzeichnet ist, die dazu eingerichtet ist, nach einem Einschalten des Computers einen Steueranschluss des Relais zunächst während einer ersten Zeitdauer mit einer ersten Versorgungsspannung und während einer zweiten Zeitdauer mit einer zweiten Versorgungsspannung zu versorgen, wobei die zweite Versorgungsspannung kleiner als die erste Versorgungsspannung ist.

Der Erfindung liegt die Erkenntnis zugrunde, dass durch die eingesetzten Relais während des ausgeschalteten Zustands des PCs zwar Energie gespart wird, indem angeschlossenen Monitoren die Netzspannung entzogen wird, die Relais ihrerseits aber ebenfalls Energie verbrauchen. Dieser Energieverbrauch wird nach der Erfindung verringert, denn während der zweiten Zeitdauer, wenn das Relais bereits die Netzspannung durchgeschaltet hat, ist nur noch verhältnismäßig wenig Leistung erforderlich, um das Relais im angezogenen Zustand zu halten.

Um die Kontakte des Relais zu schließen, ist jedoch eine höhere Leistung erforderlich. Nach der Erfindung liegt in der ersten Zeitdauer eine höhere Spannung an der Spule des Relais an, so dass auch ein großer Erregerstrom fließt. Das Relais zieht schnell zuverlässig an und schließt die Kontakte. Während der zweiten Zeitdauer, wenn die Kontakte bereits geschlossen sind, reicht eine niedrige Spannung und damit ein niedriger Erregerstrom aus, um den Zustand zu halten.

In einer vorteilhaften Ausgestaltung einer erfindungsgemäßen Schaltungsanordnung ist die Steuereinheit dadurch realisiert, dass ein Steueranschluss des Relais einerseits über eine Diode mit der zweiten, geringeren Versorgungsspannung und über einen Transistor mit der ersten Versorgungsspannung, die höher ist, verbunden ist. Während der Transistor während der ersten Zeitdauer durchgeschaltet ist, so dass die erste Versorgungsspannung am Steueranschluss des Relais anliegt, wird zeitverzögert nach dem Einschalten der Transistor hochohmig gesteuert, so dass nunmehr nur noch die geringere zweite Versorgungsspannung an dem Steueranschluss des Relais anliegt. Die Diode zwischen dem Steueranschluss des Relais und der zweiten Versorgungsspannung verhindert, dass während der ersten Zeitdauer Strom in die zweite Versorgungsspannungsquelle fließt.

In einer besonders vorteilhaften Ausgestaltung wird der Transistor durch ein so genanntes Powergood-Signal angesteuert, welches von Computern beziehungsweise von Netzteilen in Computern oft bereitgestellt wird, um anzuzeigen, dass die sekundärseitige Ausgangsspannung bereitsteht.

Die Aufgabe wird ebenfalls durch ein Verfahren zum Betreiben eines Computers gelöst, wie es im Anspruch 10 angegeben ist.

Weitere vorteilhafte Ausgestaltungen der Erfindung sind in den weiteren Unteransprüchen angegeben. Die Erfindung wird nachfolgend anhand eines Ausführungsbeispiels näher erläutert. Es zeigt:
- Figur 1: eine Anordnung mit einem Computer und einem Monitor,
- Figur 2: ein erstes Ausführungsbeispiel einer erfindungsgemäßen Schaltungsanordnung und
- Figur 3: ein zweites Ausführungsbeispiel einer erfindungsgemäßen Schaltungsanordnung.

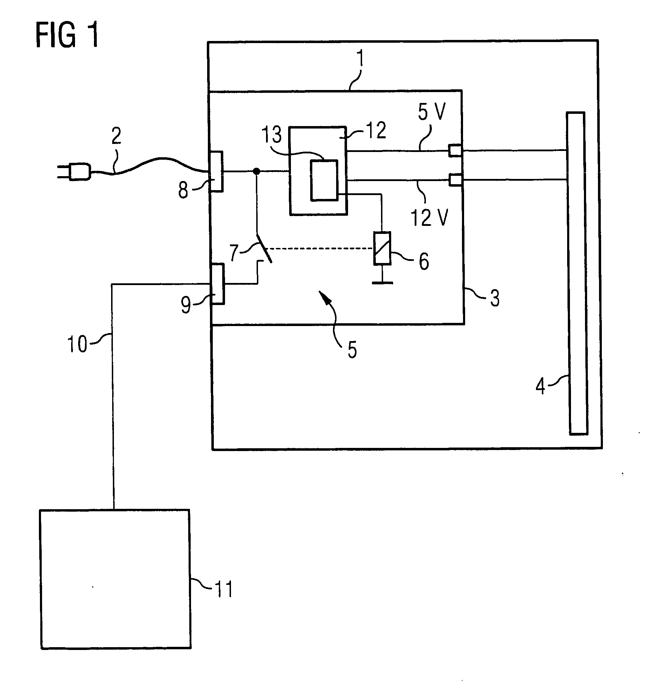

Figur 1 zeigt ein Computersystem, in dem eine erfindungsgemäße Schaltungsanordnung Anwendung findet. Ein Computer 1 ist über ein Netzkabel 2 mit einer Netzspannung verbunden. In dem Computer ist ein Netzteil 3 vorgesehen, das einerseits eine Gleichspannungsversorgung für in dem Computer vorhandene Schaltungsteile wie beispielsweise ein Mainboard 4 erzeugt. Andererseits weist das Netzteil 3 ein Relais 5 mit einer Spule 6 und Kontakten 7 auf, wodurch eine an einem Netzspannungseingang 8 anliegende Netzspannung auf eine Monitoranschlussbuchse 9 geschaltet werden kann. An den Monitoranschluss 9 ist über eine Versorgungsleitung 10 ein Monitor 11 angeschlossen. Über Schaltungskomponenten 12 des Netzteils 3, die einen Transformator, Komponenten zu seiner Ansteuerung sowie zur Glättung und Regelung der transformierten Spannung umfassen, wird aus der Netzspannung am Netzspannungseingang 8 Ausgangsgleichspannungen mit beispielsweise 5 Volt und 12 Volt erzeugt.

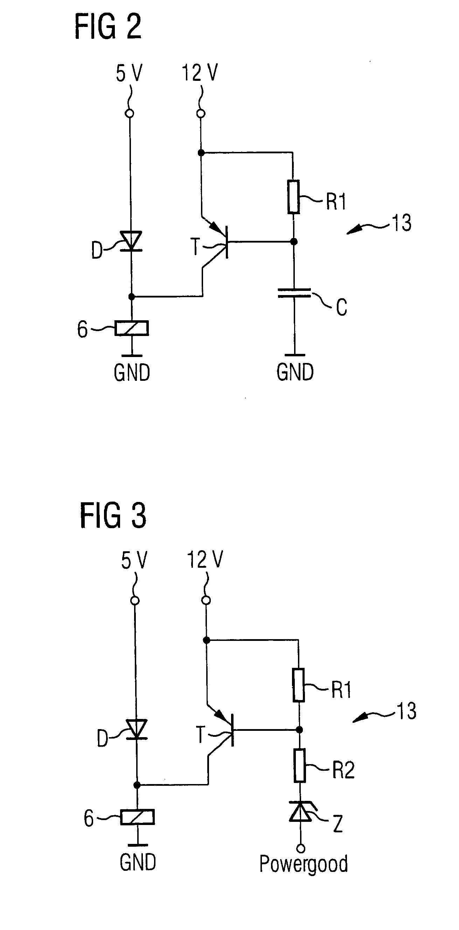

Während in der Figur 1 die Ansteuerung des Relais, das heißt der Spule 6 des Relais, schematisch gezeigt ist, zeigen Figuren 2 und 3 Ausführungsbeispiele detaillierter Schaltungsanordnungen, wie die Spule 6 des Relais 5 in erfindungsgemäßer Weise angesteuert werden kann.

In Figur 2 ist eine Steuereinheit 13 dadurch gebildet, dass ein Steueranschluss des Relais, das heißt ein Anschluss der Erregerspule 6, über eine Diode D mit dem 5 Volt-Versorgungsspannungsanschluss verbunden ist. Der gleiche Anschluss der Erregerspule 6 ist mit dem Kollektor eines Transistors T verbunden, wobei der Emitter des Transistors mit der 12 Volt-Versorgungsspannung verbunden ist. Zwischen Emitter und Basis des Transistors T ist ein Widerstand R1 geschaltet. Außerdem ist die Basis des Transistors T mit einem Kondensator C verbunden, dessen anderer Anschluss mit einem Bezugspotential GND verbunden ist.

Nach dem Einschalten des Computers steigen die Spannungen am Ausgang des Netzteils 3 mit einer gewissen Verzögerung an. Dies geschieht verhältnismäßig schnell, so dass bereits nach kurzer Zeit die Versorgungsspannungen von 5 Volt und 12 Volt zur Verfügung stehen. Die Spannung an der Basis des Transistors T entspricht der Spannung über dem Kondensator C. Unmittelbar nach dem Einschalten ist die Spannung über dem Kondensator C 0 Volt, so dass der Transistor T niederohmig gesteuert wird. Dadurch erhält die Erregerspule 6 die Versorgungsspannung 12 Volt. Der Widerstand R1 bildet mit dem Kondensator C ein RC-Glied, wobei sich der Kondensator C über den Widerstand R1 auflädt. Die Zeitkonstante wird sowohl durch den Wert des Widerstandes R1 als auch die Kapazität des Kondensators C bestimmt. Mit zunehmender Spannung über dem Kondensator C wird der Transistor T hochohmiger, bis er schließlich vollständig sperrt. Dadurch erhält der Anschluss der Erregerspule 6 keinen Strom mehr vom Versorgungsanschluss mit der 12 Volt-Versorgungsspannung. Statt dessen fließt nun, d.h. in der zweiten Zeitdauer, ein Strom vom 5 Volt-Versorgungsspannungsanschluss über die Diode D zur Erregerspule 6. Die Diode D ist dabei notwendig, damit während der ersten Zeitdauer, wenn die Erregerspule 6 von der 12 Volt-Versorgungsspannung versorgt wird, kein Strom in die 5 Volt-Spannungsquelle fließt.

Bei einer leistungsmäßigen Betrachtung ergibt sich, dass die verringerte Versorgungsspannung in etwa quadratisch in den Leistungsverbrauch eingeht, denn eine verringerte Spannung über der Erregerspule 6 bewirkt auch einen geringeren Strom, so dass eine erhebliche Reduzierung des Leistungsverbrauchs erreicht werden kann.

Die Figur 3 zeigt eine verbesserte Schaltungsanordnung. Während bei der Schaltung nach Figur 2 der Transistor beim Abschalten langsam durch einen Bereich mit verhältnismäßig hoher Verlustleistung betrieben wird, nämlich bis die Spannung am Kondensator C soweit angestiegen ist, dass der Transistor T sehr hochohmig ist, kann dies bei der Schaltung nach Figur 3 vermieden werden. Bei der Schaltung nach Figur 3 wird zur Ansteuerung des Transistors T ein so genanntes Powergood-Signal verwendet. Das Powergood-Signal zeigt normalerweise das korrekte Anliegen der Ausgangsspannung an dem Netzteil an, wobei sich eine Verzögerung von 100 bis 500 Millisekunden gegenüber dem Einschaltzeitpunkt des Computers ergibt. Für das Schalten des Relais wird eine Zeitdauer von typischerweise 20 Millisekunden benötigt, so dass die Verzögerung von 100 bis 500 Millisekunden ausschließt, dass der Transistor T abgeschaltet wird, bevor die Relaiskontakte zuverlässig geschlossen haben. Das Powergood-Signal hat den Vorteil, dass es sich um ein digitales Signal handelt und somit keine Zeit mit hoher Verlustleistung im Transistor T entsteht. Der Transistor ist entweder niederohmig oder hochohmig mit einer sehr kurzen Übergangszeit für den Zustandswechsel. Für den Transistor T kann somit ein Kleinsignaltransistor ohne Kühlkörper verwendet werden, was die Kosten für die erfindungsgemäße Schaltungsanordnung weiter reduziert.

Die Schaltung von Figur 3 funktioniert im Betrieb wie folgt. Das Powergood-Signal liegt zunächst auf 0 Volt, so lange bis die ordnungsgemäße Spannung am Ausgang des Netzteils angezeigt wird und das Power good-Signal auf 5 Volt wechselt. So lange es auf 0 Volt liegt, liegt an der Basis des Transistors T eine Ansteuerspannung, die von der Dimensionierung der Zener-Diode Z und den Widerständen R1 und R2 abhängt. Die Serienschaltung aus R2 und Z "ersetzt" dabei den Kondensator C von der Schaltung von Figur 2.

In einer beispielhaften Dimensionierung beträgt die Zener-Spannung 5,1 Volt, der Widerstand R2 hat 10 kohm und der Widerstand R1 1,5 kohm. Bei einer Versorgungsspannung von 12 Volt liegt an der Basis des Transistors T eine Spannung an, bei der der Transistor T eingeschaltet ist (0,9 Volt zwischen Emitter und Basis). Wenn das Power good-Signal auf 5 Volt wechselt, springt die Basis-Emitter-Spannung des Transistors T auf 0,26 Volt und der Transistor T sperrt zuverlässig. Somit geschieht das gleiche wie bei der Schaltung nach Figur 1, nämlich der Stromfluss von der 12 Volt-Versorgungsspannung zur Erregerspule 6 wird unterbunden, stattdessen wird die Erregerspule 6 durch die 5 Volt-Versorgungsspannung versorgt.

Die Diode D dient wiederum der Verhinderung eines Stromflusses von der 12 Volt-Versorgungsspannung zur 5 Volt-Versorgungsspannung. Sie wird vorteilhafterweise als Schottky-Diode ausgeführt, um eine geringe Verlustleistung sicher zu stellen.

Der Leistungsverbrauch der gezeigten Schaltungsanordnung ist sehr niedrig und ist nicht ungünstiger als der bei einem Schaltregler, der jedoch wesentlich aufwändiger in der Ausführung ist.

Die Schaltungsanordnungen, die in Figur 2 und Figur 3 gezeigt wurden, sind als beispielhafte Ausführungen zu verstehen. Weitere Ausführungen erfindungsgemäßer Schaltungsanordnungen liegen im Ermessen des Fachmannes, so dass die Erfindung nicht auf die gezeigten Ausführungsbeispiele beschränkt ist. Insbesondere bezüglich der verwendeten Bauteile wie Transistoren und Dioden können andere Typen verwendet werden. Die Verbindung des Powergood-Signals mit dem Steuereingang des Transistors T muss nicht unbedingt mit einer Zener-Diode ausgeführt werden. Auch muss nicht das Powergood-Signal verwendet werden, sondern andere, gegenüber dem Ausgang des Schaltnetzteils verzögerte Signale sind einsetzbar. Auch könnte zwischen dem RC-Glied in Figur 1 und dem Steueranschluss des Transistors T eine Kippschaltung angeordnet werden, um ein schnelles Umschalten des Transistors T zu bewirken.

### Bezugszeichenliste

- 1: Computer
- 2: Netzanschlusskabel
- 3: Netzteil
- 4: Mainboard
- 5: Relais
- 6: Erregerspule
- 7: Schaltkontakte
- 8: Netzspannungseingang
- 9: Monitoranschluss
- 10: Anschlusskabel
- 11: Monitor
- 12: Netzteil-Schaltungskomponenten
- 13: Steuereinheit
- D: Diode
- T: Transistor
- R1, R2: Widerstände
- C: Kondensator
- Z: 10er-Diode
- Powergood: Steuersignal
- GND: Bezugspotential

## Patentansprüche

1. Computer mit
- einem Netzspannungseingang (8),
- einem Netzteil (3), das mit dem Netzspannungseingang (8) verbindbar ist und durch das mindestens zwei Versorgungsspannungen bereitgestellt werden,
- einem Monitoranschluss (9) zum Versorgen eines Monitors (11) mit einer Netzspannung, wobei der Monitoranschluss (9) über ein Relais (5) mit einer Netzspannung verbindbar ist,
**gekennzeichnet durch** eine Steuereinheit (13), die dazu eingerichtet ist, nach einem Einschalten des Computers (3) einen Steueranschluss des Relais (5) zunächst während einer ersten Zeitdauer mit einer ersten der Versorgungsspannungen (12 Volt) und während einer zweiten Zeitdauer mit einer zweiten der Versorgungsspannungen (5 Volt) zu versorgen, wobei die zweite Versorgungsspannung (5 Volt) kleiner als die erste Versorgungsspannung (12 Volt) ist.

2. Computer nach Anspruch 1,
**dadurch gekennzeichnet, dass**
die erste und die zweite Versorgungsspannung durch einen ersten beziehungsweise zweiten Versorgungsspannungsanschluss des Netzteils (3) bereitgestellt sind.

3. Computer nach Anspruch 1 oder 2,
**dadurch gekennzeichnet, dass** die Steuereinheit (13) eine Diode (D) und einen Transistor (T) aufweist, wobei der Steueranschluss des Relais (5) über eine erste Diode (D) mit dem zweiten Versorgungsspannungsanschluss verbunden ist und über einen Transistor (T) mit dem ersten Versorgungsspannungsanschluss verbunden ist, wobei der Transistor (T) während der ersten Zeitdauer niederohmig und während der zweiten Zeitdauer hochohmig gesteuert ist.

4. Computer nach Anspruch 3,
**dadurch gekennzeichnet, dass**
die Steuerung des Transistors (T) mit einem Steuersignal (Power good) erfolgt, das aus der ersten Versorgungsspannung (12 Volt) abgeleitet ist.

5. Computer nach Anspruch 4,
**dadurch gekennzeichnet, dass**
das Steuersignal (Power good) zeitverzögert nach dem Ansteigen der Spannung (12 Volt) am ersten Versorgungsspannungsanschluss erzeugt wird.

6. Computer nach Anspruch 5,
**dadurch gekennzeichnet, dass**
die Zeitverzögerung durch eine Verzögerungsschaltung mit einem Kondensator (C) und einem Ladewiderstand (R1) erzeugt wird.

7. Computer nach Anspruch 5,
**dadurch gekennzeichnet, dass**
als Steuersignal ein Power good-Signal verwendet wird, durch das das Bereitstellen der ersten Versorgungsspannung (12 Volt) angezeigt wird.

8. Computer nach Anspruch 1,
**dadurch gekennzeichnet, dass**
ein Anschluss zur Bereitstellung des Power good-Signals über eine Zener-Diode (Z) und einen ersten Widerstand (R2) mit dem Steueranschluss des Transistors verbunden ist und der Steueranschluss zusätzlich über einen zweiten Widerstand (R1) mit dem ersten Versorgungsspannungsanschluss (12 Volt) verbunden ist.

9. Computer nach einem der Ansprüche 1 bis 8,
**dadurch gekennzeichnet, dass** die erste Versorgungsspannung eine 12 Volt-Versorgungsspannung des Computers und die zweite Versorgungsspannung eine 5 Volt-Versorgungsspannung des Computers ist.

10. Verfahren zum Betreiben eines Computers (1), an den über ein Relais (5) ein Monitor (11) zu seiner Versorgung mit einer Netzspannung angeschlossen ist, wobei durch ein Netzteil mindestens zwei Versorgungsspannungen bereitgestellt werden, **gekennzeichnet durch** die folgenden Schritte in der genannten Reihenfolge:
- Ansteuern des Relais (5) mit einer ersten der Versorgungsspannungen (12 Volt),
- Ansteuern des Relais (5) mit einer zweiten der Versorgungsspannungen (5 Volt), die niedriger als die erste Versorgungsspannung (12 Volt) ist,
wobei der Zeitpunkt zum Wechsel von der ersten zur zweiten Versorgungsspannung von einem Powergood-Signal bestimmt ist, welches von dem Computer erzeugt wird, wenn nach dem Einschalten davon ausgegangen werden kann, dass die zweite Versorgungsspannung in einem Nennbereich ist.
